# EUROPEAN PATENT APPLICATION

(11) **EP 3 709 189 A1**
(43) Date of publication of application: **16.09.2020**
(21) Application number: 19162828.8
(22) Date of filing: 14.03.2019
(51) Int. Cl.: G06F 16/25, G06F 16/901, G06N 5/02

(54) **RECOMMENDER SYSTEM FOR DATA INTEGRATION**

(71) Applicant: Siemens Aktiengesellschaft, 80333 München (DE)
(72) Inventor: Mogre, Parag, 80807 München (DE); Rümmele, Nataliia, 81739 München (DE)

(57) **Abstract**

The present invention relates to methods for data integration into a knowledge graph. Fusion data of a data source is obtained comprising a plurality of features, which are extracted from a schema of the data source and from data of the data source. A learnt fusion model is applied to the data, wherein the fusion model comprises a combination of a machine-learning model and a rule-based model, in order to recommend to a user mapping specifications for mapping data of the data source and the schema of the data source to the knowledge graph.

## Description

### Technical field

Various examples of the invention generally relate to data integration. Various examples specifically relate to integrating a heterogeneous data source into a knowledge graph.

### Background

Conventional techniques for integrating data sources into a database cannot be easily applied to many data sources in a world of data, which often is complex and unstructured, making it difficult to gain value from data. The situation is even more difficult, when the data resides in disparate and/or heterogeneous data sources or systems. In order to gain insights from such data, the data sources have to be combined, and a unified view of the data has to be built. Accordingly, combining data from disparate and/or heterogeneous data sources is a complex problem, in particular in the domain of industrial applications.

Conventional mechanisms for solving this problem include designing a global model, which offers a unified view of the data, and constructing a data source description, which specifies necessary steps to transform data from a data source into the global model. The specificity of the particular area of industrial applications is the variety and amount of temporal and measurement data, where domains exist with predominantly temporal or highly dynamic data or measurement data, which commonly cannot be easily integrated into a database.

According to conventional techniques for integrating data sources, a data scientist, or data engineer, goes through each data source, identifies which data is of interest, and defines transformations and mappings, which unify these data with a database, or other data sources. This process usually includes writing scripts with potentially overlapping code. Several existing tools help in this process, which are commercially available on the market. Among commercial tools, there are Palantir, AWS Glue, FluidOps, Maana, IBM, Tamr, Trifacta, Boomi, Stardog mapping, and others.

The above-mentioned tools provide support in the process of combining data. However, they have certain drawbacks.

For some of the tools, e.g. Palantir, IBM, Tamr, Trifacta, the global model is not an ontology, therefore the data is not integrated into a knowledge graph. This limits the expressivity and usability of the unified data.

Supported data formats may not include other ontologies or knowledge graphs. For example, there is a need to extend data with Link Open Data or align an existing ontology with the global model.

The above-mentioned products are not custom tailored for industrial applications and Internet of Things (IoT), which, in particular, comprise situations when there is a lot of highfrequency timestamped data.

The above-mentioned products do not provide functionality of guiding the user in constructing a knowledge graph on top of disparate data sources, likewise, they do not recommend to a user mapping specifications for a data source.

Reconciling two major AI mechanisms, rule-based mechanisms and machine-learning mechanisms, is a difficult task, and known tools, and systems, in other words platforms, commonly use only one AI mechanism.

There are also several known open source and academic tools, which help in the process of data unification.

A widely spread mechanism for mapping data to an ontology is to specify mappings manually, for example using a W3C standardized mapping language such as R2RML, and then "apply a tool like "ontop" to automate the mapping process.

Known tools, like Karma and Serene, offer an option to learn mappings based on previously provided instances of mappings.

The functionality of the above-mentioned tools is not suited for industrial applications, and they provide only limited functionality in recommending users the best ways to construct knowledge graphs from their data.

As the variety of data continues to expand, the need for improved techniques in this unification process rapidly increases.

### Summary

Accordingly, there is a need of advanced techniques for integrating data sources into a knowledge graph. Specifically, there is a need for techniques, which overcome or mitigate at least some of the above-identified restrictions and drawbacks.

It is therefore an object of the present invention to provide such an improved method for integrating a data source into a knowledge graph, a respective device, computing system, computer program product, and computer-readable storage medium, which provide faster and easier integration of a data source into a knowledge graph.

This object is solved by the subject matter of the independent claims. Further advantageous features are subject matter of the dependent claims.

According to a first aspect of the invention, a method for integrating a data source into a knowledge graph is provided, wherein the method comprises the following steps.

In a first step, fusion data is obtained, wherein the fusion data comprises a plurality of features, which are extracted from a schema of the data source and from data of the data source.

In another step, a fusion model is applied to the fusion data, wherein the fusion model comprises a combination of a machine-learning model and a rule-based model, in order to generate mapping specifications, which are to be used for mapping data of the data source and the schema of the data source to the knowledge graph, when integrating the data source into the knowledge graph.

Thereby an improved method for integrating a data source into a knowledge graph is provided, which enables faster and facilitated integration of the data source, as well as ensures high quality and reliability of the integrated data, by recommending mapping specifications for the data source to a user, thus avoiding a lengthy manual integration procedure. Accordingly, techniques according to the invention may provide efficient ways to handling the great variety and amount of temporal and measurement data in the area of industrial applications.

In particular, a user may be recommended the best ways to construct knowledge graphs from disparate data sources. In other words, a facilitated and faster way may be provided for merging disparate and/or heterogeneous data sources into a knowledge graph, wherein the knowledge graph may also be referred to as an ontology-driven database, or Linked Industrial Data (LID) cloud. Thus, users may be provided with a facilitated way to construct such a knowledge graph from these data sources.

Based on the finding that ontologies provide a way to describe the semantics of data, this simplifies data exchange and sharing. Further, a user may be provided with various ways to share and exchange data, by using a contributor module, which may be implemented in a system according to the invention.

Usage of domain-specific ontologies following W3C standards may ensure that the constructed knowledge graph can be linked to other W3C-compliant knowledge databases (e.g., Wikidata, Linked Open Data cloud), wherein easier access to Semantic Web Technologies is provided.

As techniques according to the present disclosure are reconciling two major AI mechanisms, rule-based and machine-learning mechanisms, and in particular use a knowledge graph functionality to combine these two mechanisms, they offer a unified AI mechanism to a user. In other words, a hybrid AI mechanism to the problem of combining data from disparate and/or heterogeneous data sources may be provided as a unified solution to a user.

Such a fusion model for generating mapping specifications may, therefore, be referred to as a constrained machine-learning model, or a machine-learning model with constraints.

The method may further comprise integrating, using the mapping specifications, data from the data source into the knowledge graph, wherein in particular data of the data source and schema of the data source are mapped to the knowledge graph. However, also without physically integrating data from the data source into the knowledge graph, mapping specifications may be used for virtual integration, wherein data remain in the data source and upon a query will be combined or integrated.

Obtaining data may comprise extracting the data source schema and sample data, which may be a subset of the data of the data source, from the data source, and extracting the features from the data source schema and from the sample data, in order to determine the fusion data. By using sample data, which is a subset of the data of the data source, a modular system architecture is enabled, providing more flexibility in terms of data access and setting up security protocols. In such a way, not all components, or models, of a software platform may have access to the raw data, wherein some components may have access only to a small portion, or subset, of the data from a heterogeneous data source, i.e. the sample data. In such a way, security concerns of users may be handled in an easier way.

The fusion data may further comprise at least one schema constraint of the data source, which may be extracted from the data source. Thereby, the fusion model is able to generate mapping specifications more precisely taking into account constraints extracted from the data source.

The data source may be a structured data source, wherein extracting the data source schema and sample data may comprise receiving a stream of instance data from the structured data source, and detecting the conceptual data source schema of the structured data source.

The data source may be an unstructured data source, wherein extracting the data source schema and sample data may comprise determining a data source schema from the unstructured data source, and receiving data from the unstructured data source, using a machine-learning mechanism.

The data integration techniques according to the invention enable integrating both a structured data source and an unstructured data source into a knowledge graph, wherein mapping specifications may be recommended to the user for either one of the data sources.

The rule-based model of the fusion model may be applied to the fusion data further utilizing at least one of axioms of the knowledge graph, user-specified rules, template transformations, user-specified transformations, and an ontology of the knowledge graph. Using these additional, in other words optional inputs, the fusion model can handle the fusion data more efficiently, and therefore provide mapping specifications faster and better tailored for the specific data source and user-specific circumstances.

According to a further aspect, a method for learning a fusion model for integrating a data source into a knowledge graph is provided, wherein the method comprises the following steps.

In a first step, training data is obtained, wherein the training data comprises a plurality of features, which are extracted from a schema of a training data source and from data of the training data source. The training data further comprises mapping specifications for mapping data and the schema of the training data source to the knowledge graph, when integrating the training data source into the knowledge graph.

In a further step, a fusion model for generating mapping specifications for mapping data and a schema of a data source to the knowledge graph is learned based on the training data, wherein the fusion model comprises a combination of a machine-learning model and a rule-based model, in other words the fusion model comprises a machine-learning part or model and a rule-based part or model.

The fusion model, or in other words the combined model, may be learnt further utilizing at least one of schema constraints, an ontology of the knowledge graph, one or more axioms, and one or more template transformations.

According even a further aspect, a fusion model for integrating a data source into a knowledge graph is provided as a product of any of the methods for learning a fusion model, as described in the present disclosure.

In such a way, a model may be provided to a user, which is specifically tailored to the user's industrial application, in particular to the specific data, such as high-time frequency measurement data of the user's industrial application. Mapping specifications may therefore be provided by the learnt fusion model, which are more precise and more specific to the data sources of the user.

The knowledge graph may be an ontology-driven database, which is based on at least one ontology. The ontology of the knowledge graph may be a domain ontology, in particular a domain ontology of an industrial application, or a domain ontology in the field of industrial applications. The mapping specifications may be in a format selected from R2RML, SPARQL, RML, YAML, and JSON. Thereby, mapping specifications may be provided, which are more specific to a user's industrial applications.

According to a further aspect, a device for integrating a data source into a knowledge graph is provided, which is configured to perform the following steps. According to various embodiments, the device may comprise a memory, and at least one processing unit, wherein the memory may contain instructions executable by said at least one processing unit, wherein execution of the instructions causes the device to execute the following steps.

In a first step, fusion data is obtained, wherein the fusion data comprises a plurality of features, which are extracted from a schema of the data source and from data of the data source.

In another step, a fusion model is applied to the fusion data, wherein the fusion model comprises a combination of a machine-learning model and a rule-based model, in order to generate mapping specifications for mapping data of the data source and the schema of the data source to the knowledge graph, when integrating the data source into the knowledge graph.

The device may be configured to perform any other method or any combination of methods as described in the present disclosure.

According to a further aspect, a system, or a computing system is provided, which is configured to perform a method as described in the present disclosure. The computing system may be a cloud-based or a cluster-based computing system, or platform, or computing environment.

Consequently, the system may be referred to as a recommender system for data integration, or data unification. In particular, it may be a modular platform, comprising a plurality of independently operably modules communicating with each other, wherein each component may be configured for at least a part of the steps of the methods for integrating a data source into a knowledge graph, as will be described in more detail throughout the present disclosure.

According to a further aspect, a computer program, or a computer program product, is provided, comprising program code, which is to be executed by at least one processor, wherein executing the program code causes the at least one processor to perform any of the methods as described in the present disclosure.

According to a further aspect, a computer-readable storage medium is provided, comprising instructions which, when executed by a computer, cause the computer to carry out one of the methods as described in the present disclosure.

For such a device, computing system, computer program, and computer readable storage medium, for integrating a data source into a knowledge graph, technical effects may be achieved, which correspond to the technical effects described for the method for integrating a data source into a knowledge graph.

Although specific features described in the above summary and the following detailed description are described in connection with specific embodiments and aspects of the present invention, it should be understood that the features of the exemplary embodiments and aspects may be combined with each other, and correlate to each other, unless specifically noted otherwise.

Therefore, the above summary is merely intended to give a short overview over some features of some embodiments and implementations and is not to be construed as limiting. Other embodiments may comprise other features than the ones explained above.

### Brief description of the drawings

The above and other elements, features, steps, and characteristics of the present disclosure will be more apparent from the following detailed description of embodiments with reference to the following figures:
- Figure 1: schematically illustrates a flowchart with steps of a method for integrating a data source into a knowledge graph, according to embodiments of the invention;
- Figure 2: illustrates a schematic drawing a system architecture of a system for integrating a data source into a knowledge graph, according to embodiments of the invention;
- Figure 3: schematically illustrates a process flow of a method for learning a fusion model for integrating a data source into a knowledge graph, according to embodiments of the invention;
- Figure 4: schematically illustrates a process flow of a method for integrating a data source into a knowledge graph, according to embodiments of the invention;
- Figure 5: schematically illustrates a data source, according to embodiments of the invention;
- Figure 6: schematically illustrates another data source, according to embodiments of the invention;
- Figure 7: schematically illustrates a domain ontology, according to embodiments of the invention; and
- Figure 8: schematically illustrates a drawing of a device for integrating a data source into a knowledge graph, according to embodiments of the invention.

### Detailed description of embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, modules or other physical or functional units shown in the drawings or described herein may also be implemented by a direct or indirect, connection or coupling. A coupling between components may be established wired or over a wireless connection. Functional blocks, computing devices, modules or entities may be implemented in hardware, firmware, software, or a combination thereof.

Hereinafter, various techniques with respect to integrating a data source into a knowledge graph, in particular to employing a modular platform in a cloud computing environment for integrating a data source into a knowledge graph, are described.

The techniques according to the invention use ontology, or a collection of ontologies, as a global model for combining data sources. Likewise, a knowledge graph, in which a new data source is to be integrated, is an ontology-based database or ontology-driven database. In particular, usage of domain ontology allows explicitly stating the semantics of data and enables data sharing and exchange. By providing a recommender system, users can be guided in bringing heterogeneous data sources into the knowledge graph, which contains instance data for the ontologies. In specific embodiments, these ontologies are domain specific ontologies, and more specifically they come from industrial applications.

Such domain ontologies and the constructed knowledge graph form the basis of an ontology-driven database, which may be referred to as Linked Industrial Data (LID) cloud, and which is to be differentiated from Linked Open Data, as will be explained in the following.

Another important part of a LID cloud includes machine-learning and rule-based models which are used according to the invention in combination, wherein a model, which may also be referred to as a fusion model or a combined model, comprises a combination of a machine-learning model and a rule-based model, and, therefore refers to fusion or a combination of a machine-learning model and a rule-based model. In such a way, the proposed techniques reconcile the two most popular Artificial Intelligence (AI) techniques and offer a combined solution.

A data source may refer to a heterogeneous data source, and/or a disparate data source, wherein the data source comprises data to be integrated into a database. The data of the data source may be integrated into a knowledge graph, or it may be combined with data of at least one other data source, by the use of the mapping specifications, as may be referred to as data unification.

Based on the techniques described in the present disclosure, a recommender system, or platform, for integrating a data source into a knowledge graph may be provided. Such a mechanism may be based on the finding of further advantages of the techniques according to the present disclosure.

According to a modular computing system, separate components, or in other words, modules, for data ingestion, extraction, and contribution may provide better control of how data is stored, processed, and how data is shared with other parties.

The overall architecture of such a modular system may be based on micro-services, thus, the user can deploy sensitive services (e.g., an ingestor module) in a higher security environment. Different access patterns may be configured via a coordinator module. Therefore, data concerns of a user may be separated.

Due to a modular architecture of the system and availability of the coordinator module, the system may provide flexibility to be adjusted to customer needs.

The integrator module of the modular system provides means to learn a fusion model in an automatic way, wherein the learnt fusion model is the core of the recommender system for mapping specifications for constructing knowledge graphs. Based upon the learnt fusion model, a recommender system for constructing knowledge graphs may be provided.

By the availability of a recommender system, which helps the user in the process of data integration, manual effort and time for data preparation tasks may be reduced.

Thus, by the techniques according to the invention, the following tasks may be enabled and/or facilitated.

Extract Transform Load (ETL) techniques for ingesting data into the knowledge graph may be provided. A data preparation step for analytical tasks may be provided. A domain ontology may be chosen. Semantics of data may be enriched. Data exchange between different parties may be enabled. Moreover, customer data may be enhanced with external databases, for example weather information, information about major events, Linked Open Data, and the like.

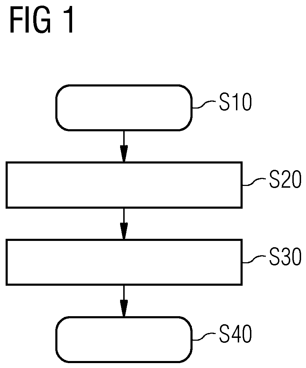

Figure 1 schematically illustrates a flowchart with steps of a method for integrating a data source 10, 11 into a knowledge graph, according to embodiments of the invention.

Turning to Figure 1, the method starts in step S10. In step S20, fusion data is obtained, wherein the fusion data comprises a plurality of features, which are extracted from a schema of the data source 10, 11 and from data of the data source 10, 11. The fusion data may further comprise at least one schema constraint, which is extracted from the data source 10, 11. In step S30, a fusion model is applied to the data, wherein the fusion model comprises a combination of a machine-learning model and a rule-based model, in order to generate mapping specifications for mapping data of the data source and the schema of the data source to the knowledge graph, when integrating the data source into the knowledge graph. The method ends in step S40.

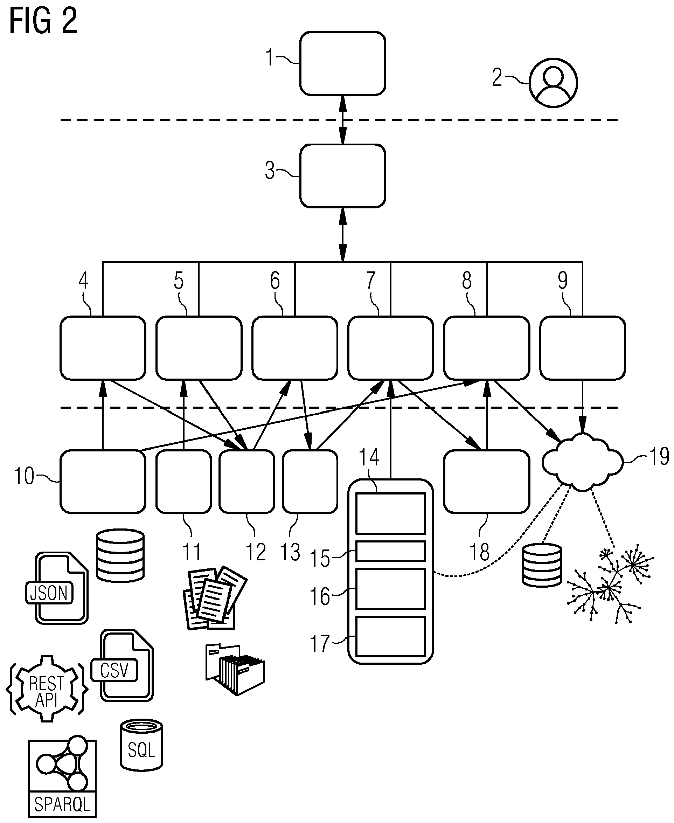

Figure 2 illustrates a schematic drawing a system architecture of a system 200 for integrating a data source into a knowledge graph, according to embodiments of the invention.

Turning to Figure 2, a system architecture of a modular system 200 for integrating a data source to knowledge graph is depicted. The system 200 comprises a user interface 1 to be used by a user 2 for interacting with the system 200. The modular system 200 may be a cluster-based system or a cloud-based system, in other words, it may be deployed on more than one computing device, and in particular, the system 200 is built in such a way that each of the modules or components may be operated independently on a device in a cluster or cloud-based computing environment.

Therein, the modular system 200 further comprises a coordinator module 3, with which the user interface 1 communicates. The coordinator module 3 may communicate with each of the other modules, as will be described in the following, by using a JSON data format.

The modular system 200 further comprises a plurality of independently operable modules 4, 5, 6, 7, 8, 9, which are communicating with each other based on at least a data layer. In particular, system 200 comprises an ingestor module 4, an interpreter module 5, and extractor module 6, and integrator module 7, a materializer module 8, and a contributor module 9. The materializer module 8 and the contributor module 9 communicate with a database 19. The Database 19 may be a cloud based database, and in particular, may be a LID cloud, as will be described in detail. The database 19 comprises a data layer, in which a new data source is to be integrated. Database 19 may comprise training data 14, axioms 15, transformations 16, which may be used for performing a method for learning a fusion model for integrating a data source 10, 11 into the database 19.

The modules 4, 5, 6, 7, 8, 9, and how they interact with each other, will be described in the following in further detail.

As depicted in Figure 2, the overall architecture of the system 200 consists of the several modular components 4, 5, 6, 7, 8, 9, wherein the modular components, in other words components or modules of the platform, may be wrapped into a Docker container for enhanced agility, portability, and security. Such architecture allows flexibly extending the modular system 200 with additional components and customizing the existing components 4, 5, 6, 7, 8, 9 based on specific user requirements.

The LID cloud 19 is the main part of the modular system's data layer and consists of several important components: domain ontologies with instance data, temporal/highly dynamic data, fusion models 17, training data 14, axioms 15 and template transformations 16.

Although stored differently, all these components are referenced within the knowledge graph. Domain ontologies with instance data are stored within a dedicated graph database (either PGM or RDF-based). Fusion models 17 are trained AI models (either Machine-learning or rule-based models) which can be applied to a new data source 10, 11 to produce a mapping specification 18 used for schema mapping and/or data mapping, in particular integrating data of a data source into the knowledge graph, or to build a knowledge graph from one or more disparate and/or heterogeneous data sources 10, 11. Therein, according to various embodiments, schema mapping is done before mapping the instance data, likewise, first the mapping specification for the schema is created, and only afterwards the mapping for the data.

Fusion models 17 are the core of the recommender system 200, which helps the user 2 build a knowledge graph. Semantic Web technologies (i.e., knowledge graphs and ontologies) have proven invaluable for integrating and querying heterogeneous data. Wikidata provides a good example how these technologies help with the integration problem.

The user interface 1 provides to a user 2 a possibility to visually explore and configure the process of merging their data sources 10, 11 into the Knowledge Graph of the LID cloud 19. The user interface 1 communicates via REST API with the coordinator module 3. The coordinator module 3 is needed to configure the different modules of the data merging process as well as to schedule and track various tasks and resources. The main functionality of the system 200 is performed by at least one or more of the following modules 4, 5, 6, 7, 8, 9, which will be described in the following.

An ingestor module 4 provides connectors to structured data sources 10. For example, structured data sources 10 include such formats as CSV, JSON, XML, Excel spreadsheets, REST API requests, SQL queries, SPARQL queries, relational databases, graph databases, and the like. For each format a dedicated connector is implemented, which can stream the instance data of the respective data source 10 and which detects, which conceptual schema is used by the data source. Further, as part of its functionality, the ingestor module 4 samples data, which in some embodiments may be referred to or comprise instance data of the data source, for the data source and persists the sample data together with the detected data source schema, as sample data and schema 12, to the data layer. Furthermore, unstructured data sources 11, for example text documents, images and so on, are not handled by the ingestor module 4.

An interpreter module 5 handles unstructured data sources 11, and is capable to extract, from such an unstructured data source 11, a data source schema, and information necessary to populate the data source schema. Interpreter module 5 persists the data source schema and sample data to the data layer. Unstructured data sources 11 may comprise text documents, images, and so on. Therein, specialized Machine-learning mechanisms may be used to extract a data source schema and sample data, as known to a person skilled in the art. The user 2 may have the option to correct the suggestions from the machine-learning models, or manually specify which rules must be used to extract the data from the unstructured data sources 11.

An extractor module 6 provides fusion data 13. The fusion data 13 corresponds to the data for integrating a data source into a knowledge graph, comprising a plurality of features, which are extracted from a schema of the data source and from data of the data source, and may in some embodiments comprise at least one schema constraint, which is extracted from the data source.

The extractor module 6 derives features from the sample data and from the schema 12 of the data source, and may further derives other required information for the applying method and the learning method according to the invention. The extractor module 6 provides this information as fusion data 13 to the integrator module 7.

The extractor module 6 is separated from the ingestor module 4 and the interpreter module 5, in order to provide more flexibility in terms of data access and setting up security protocols. Likewise, the ingestor module 4 and the interpreter module 5 have access to the raw data, while the extractor module 6 may have access only to a small portion of the data. This way, the recommender system 200 provides the users a way to better separate data concerns. Such features extracted from the sample data and the schema from the data source 12 may comprise for example an average length of data points of the data source, a quantity of numbers, or letters or special characters, and other features used in a Machine-learning mechanism, as known to a person skilled in the art.

Fusion data 13 may refer to features extracted from a data source schema and sample data, in other words, fusion data 13 may comprise extracted features for schema elements, in other words for schema elements comprising sample instance data. Accordingly, fusion data 13 may be data provided to and to be used by the integrator module 7, which is an AI-module based on a machine-learning mechanism and a rule-based mechanism, in other words the fusion model may comprise a machine-learning model and a rule-based model.

An integrator module 7 provides a recommendation for mapping specifications 18, which helps users in building knowledge graphs for the user's disparate data sources 10, 11, , i.e. integrating the data sources 10, 11 into database 19. The core of this recommender system is a fusion model. The integrator module 7 may also be used to learn a fusion model from training data, and to apply a fusion model to fusion data 13, in order to obtain mapping specifications 18.

A materializer module 8 provides the means to materialize data from heterogeneous data sources 10, 11 into the knowledge graph using mapping specifications 18. The materializer module 8 also attaches provenance to the generated content in the knowledge graph.

It is to be appreciated, that the materializer module 8, physically integrating data from a data source 10, 11 into a knowledge graph, is optional. Likewise, the mapping specifications 18 may be used for a virtual integration of the data source 10, 11, in other words, to obtain virtually data integration, wherein the data may remain in the data source 10, 11 and may be subsequently loaded and integrated into a knowledge graph only in reaction to a request or query.

A contributor module 9 gives an opportunity to contribute different types of data to the Linked Industrial Data cloud 19. These data are used by the system 200 to improve the recommendation of mapping specifications 18. Contributions may be made across the following categories.

Instance data may be published to the LID cloud 19, allowing other users and applications of the LID cloud 19 to access new data and enhance their data with new information.

One or more of an ontology, a domain ontology, axioms, template transformations, fusion data as training data, and sample data, may be contributed to the LID cloud 19. These contributions may be used to improve the performance of the recommender system 200 in particular the integrator module 7. The user 2 can control the terms of the contributions. A contribution can be made public within the LID cloud 19, or accessible only to the user-specific applications.

Further, user 2 has several ways to interact with the system 200, as will be described in the following.

A specific module of the system 200 may be imported as a library enter user-specific code. User-specific applications may be implemented, which interacts with the coordinator module 3. The user 2 may interact with the User Interface 1.

The user 2 may leverage the modular architecture of the system 200 using the coordinator module 3. For example, in the case, that the user already has mapping specifications for specific data sources 10, 11 in one of the supported formats, e.g. R2RML, the user 2 may configure the system 200 to use only the ingestor module 4 and materializer module 8 to build the knowledge graph for their use case.

For the case that the user 2 does not want to physically persist the constructed knowledge graph they can skip the materializer module 8 and opt for the Virtual Graph concept.

In general terms, one or more modules selected from the group consisting of the ingestor module 4, the interpreter module 5 and the extractor module 6, as well as the presence of one or more of the integrator module 7 and the materializer module 8, are used in a technique according to the invention.

The overall system 200 may be cloud native, in other words, it may be deployed in a computing cloud or cloud-based computing environment, and in particular may be deployed on Mind-Sphere, or any other cloud provider.

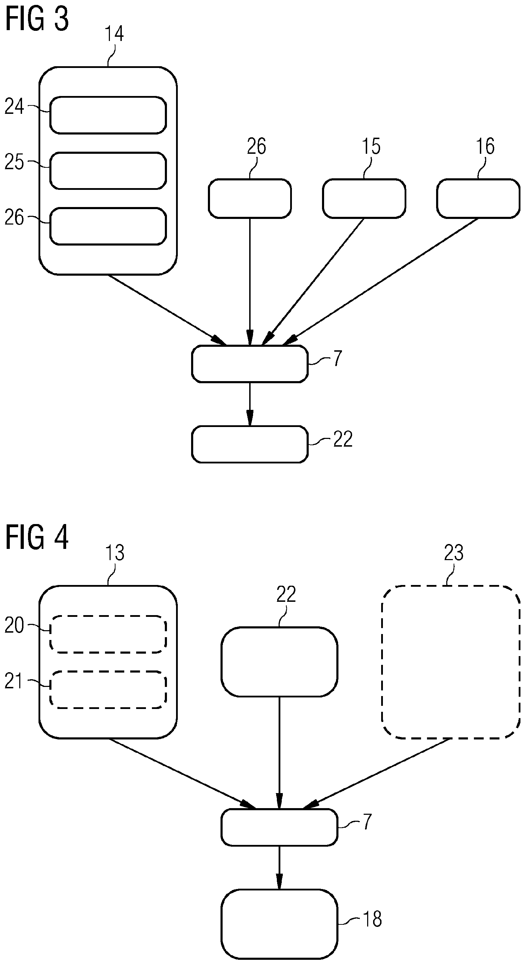

Figure 3 schematically illustrates a process flow of a method for learning a fusion model 22 for integrating a data source into a knowledge graph, according to embodiments of the invention.

Turning to Figure 3, integrator module 7 is used to learn a fusion model 22 for integrating a data source into a knowledge graph based on training data 14 of a training data source. The training data 14 comprises features for schema elements 24 of the training data source and mapping specifications 26 for the training data source, in particular training data 14 comprises a plurality of features 24, which are extracted from a schema of a training data source and from data of the training data source, and mapping specifications 26 for mapping data and the schema of the training data source to the knowledge graph.

Optionally, integrator module 7 receives as input one or more of schema constraints 25, an ontology 27 or a domain ontology 27, axioms 15 and template transformations 16. Based on the training data 14 and using one or more of the optional inputs, integrator module 7 learns a fusion model 22 for generating mapping specifications for mapping data and a schema of a data source to the knowledge graph, which comprises a combination of a machine-learning model and a rule-based model, based on the training data. The fusion model 22 may be stored in the database 19, and may be received from the database 19, for use with a method for integrating a data source into the database 19, and subsequently may be applied as fusion model 22 for recommending mapping specifications 18 to a user.

Figure 4 schematically illustrates a process flow of a method for integrating a data source into a knowledge graph, according to embodiments of the invention.

Turning to Figure 4, the learnt fusion model 22 from Figure 3 is applied to fusion data 13 by the integrator module 7. Accordingly, Figure 4 illustrates the overall process how the learnt fusion model 22 is applied to the fusion data 13.

The integrator module 7 receives as input fusion data 13 of a data source to be integrated into a knowledge graph, which may also be referred to as fusion data 13. The fusion data 13 comprises a plurality of features, which are extracted from a schema of the data source and from data of the data source, and schema constraints, which are extracted from the data source.

Further, integrator module 7 may receive as optional input 23 one or more of axioms of the knowledge graph, user-specified rules, template transformations, user-specified transformations, and an ontology or a domain ontology of the knowledge graph. As known to a person skilled in the art, for a machine-learning mechanism, a fusion model 22 is mandatory and an ontology is optional, wherein for a rule-based mechanism, an ontology is mandatory and the fusion model 22 is optional. According to various general examples, the fusion model 22 is considered mandatory input for the integrator module and an ontology is optional.

The integrator module 7 applies the fusion model 22, which comprises a combination of a machine-learning model and a rule-based model, to the fusion data 13 to generate mapping specifications 18 for mapping data and the schema of the data source to the knowledge graph.

As depicted in Figure 4, the integrator module 7 of a recommender system 200 according to the invention is used to help build a knowledge graph. The main step in this process is to obtain mapping specifications 18. These mapping specifications 18 can be specified using either a W3C standard mapping language R2RML or other languages, such as RML, YAML, JSON, and the like. It is to be appreciated that the before mentioned list of options for mapping specifications 18 is not exhaustive and serves only as an approximate reference, as known to a person skilled in the art.

The integrator module 7 can handle noise in the data sources, which can be or include one or more selected from a group comprising: naming conflicts, including specific cases where users represent the same data in different ways; semantically different attributes, which might have syntactically similar content, e.g. start-date vs end-date; and attributes which do not have any corresponding property in the ontology (unmatched attributes).

Since fusion models 22 are trained according to the invention on data coming from industrial applications and our enhanced using axioms and transformations typical in industrial applications, which may be user specific, the integrator module provides a recommender system tailored towards construction of knowledge graphs within the domain of industrial applications, which is suited for user-specific data sources and use cases.

The integrator module 8 can be further enhanced with functionality for data quality checking. For example, an entity resolution capability can be added as an additional module to identify and resolve similar entities across disparate data sources.

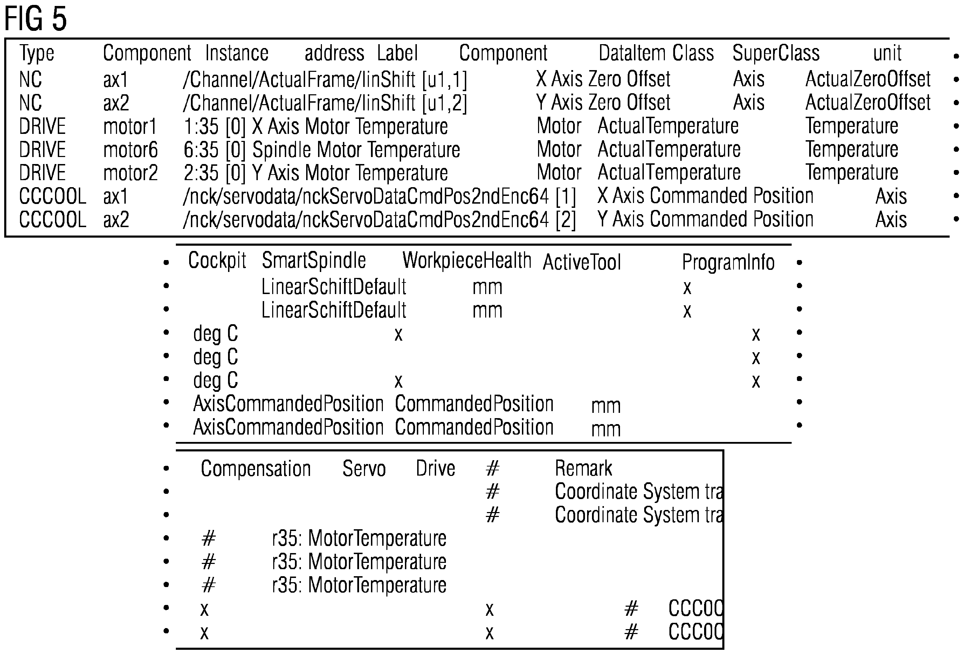

An example of integrating data sources, which collects sensor data for a machine tool, will be described in the following with reference to Figures 5 to 7.

Figure 5 schematically illustrates a data source 10, according to embodiments of the invention.

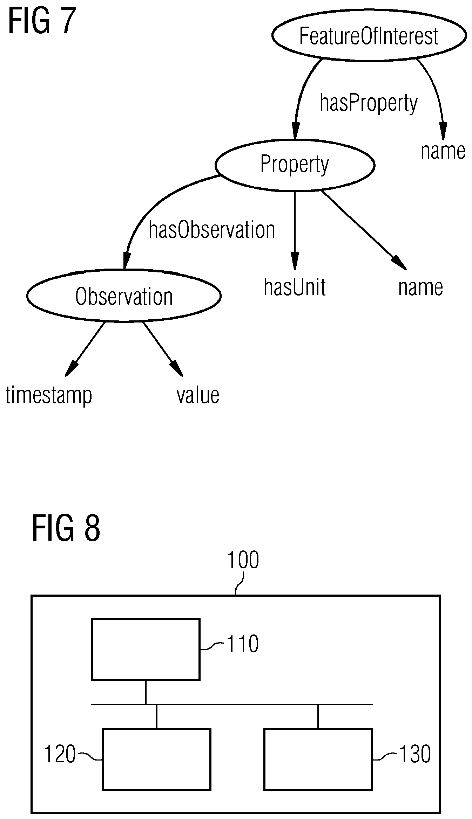

As depicted in Figure 5, the first data source 10 is the tab-delimited data source, which may be named 'machine-tool-description.txt', which provides information about the machine tool and its components. This source may come together with the machine tool, and is a txt file. This source provides meta information about available sensors, what type of data they collect and other information which is not so important considering the given ontology, as will become evident with reference to Figure 7. The first data source 10 is depicted wrapped into three lines for easier presentation in Figure 5.

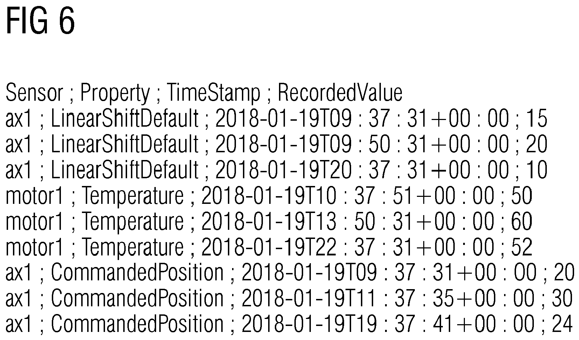

Figure 6 schematically illustrates another data source (10), according to embodiments of the invention.

As depicted in Figure 6, the second data source may be named 'records.csv', it may come for example from the field, and contains recorded values by various data sources. This data source is a csv file.

Figure 7 schematically illustrates a domain ontology, according to embodiments of the invention.

The domain ontology is given as depicted in Figure 7. This is an example ontology and its content depends on the use case at hand. In our example we have three classes ('FeatureOfInterest', 'Property' and 'Observation'). There are two object properties ('hasProperty' and 'hasObservation'). There are four datatype properties ('hasUnit', 'value', 'timestamp' and 'name').

According to this example, both data sources are to be integrated into the Knowledge Graph using the given ontology. For this purpose we need to build a mapping specification from the schemas of each data source into the ontology. A method according to the invention may be applied.

First, the ingestor module extracts schemas from the data sources. Ingestor understands that both data sources are relational: the first data source ('machine-tool-description.txt') is a relation with 17 attributes machine-tool-description(Type, Component Instance, address, Label, Component, DataItem Class, SuperClass, unit, Cockpit, SmartSpindle, WorkpieceHealth, ActiveTool, Programlnfo, Compensation, Servo, Drive, #Remark).

The second data source ('records.csv') is a relation with four attributes records (Sensor, Property, TimeStamp, RecordedValue). The ingestor module also understands that the first data source contains seven records, which correspond to data values, and the second data source contains nine records which correspond to the data values of the data source. It is to be noted that in other embodiments, there can be an arbitrary number of records, e.g. millions of records. The ingestor module generates a random sample of these records as sample data. The ingestor module then passes over the extracted schemas and sample data further to extractor module.

The extractor module generates features from schemas and sample data. In our example, there are no schema constraints. However, if our two data sources originate from a relational database, it is be possible to extract constraints such as primary or foreign keys and others. Obtained features are fed as fusion data to the integrator module.

The integrator module can then apply one of the learnt fusion models to recommend mapping specifications for the example data sources. In particular, the machine learning part of the fusion model will predict a mapping from attributes of schema to the concepts in the domain ontology (classes or datatype properties), and then the rule based part of the fusion model will try to suggest paths from the ontology (i.e., combinations of object properties) to connect the mapped concepts. Each predicted mapping specification has a score, which indicates how confident the learnt fusion model is. These scores are used to rank mapping specifications. Furthermore, mapping specifications can be improved if there are additional axioms or rules.

In this example, no additional axioms or rules are specified, but there could be axioms within the domain ontology, e.g. saying that values for measuring shifts must be in the range of 10 up to 30.

For the first data source, the mapping specification should indicate that attribute 'Component Instance' corresponds to the 'name' datatype property of an instance of the class 'FeatureOfInterest'. As can be noted, names of classes, datatype properties and names of attributes (colloquially called columns for relational data sources) do not match, but this is not a problem when applying techniques according to the invention, since they employ machine-learning approaches.

A complete mapping specification for the first data source would also indicate that attribute 'Superclass' corresponds to the 'name' datatype property of an instance of the class 'Property' and attribute 'unit' corresponds to the 'hasUnit' datatype property of the same instance. The rest of attributes from the first data source will have no mapping with regard to the given ontology.

The integrator module according to the invention considers that not all attributes or schema elements will have a mapping to the ontology, and hence should be disregarded.

The mapping specification for the second data source should indicate that attribute 'Sensor' corresponds to the 'name' datatype property of an instance of the class 'FeatureOfInterest', attribute 'Property' corresponds to the 'name' datatype property of an instance of the class 'Property' while attributes 'Timestamp' and 'RecordedValue' are corresponding datatype properties 'timestamp' and 'value' of an instance of the class 'Observation'.

After the integrator module recommends mapping specifications for two data sources, the user can choose whether to materialize data in the knowledge graph (by applying Materializer). If the user chooses to do so, the materializer module recognizes that there is high frequency data present, and hence all recorded values will be stored within a dedicated store (e.g., Amazon DynamoDB) while the rest of the mapped will be materialized in a dedicated graph store (e.g., Amazon Neptune) .

Figure 8 schematically illustrates a device for integrating a data source into a knowledge graph, according to embodiments of the invention.

Turning to Figure 8, a device 100 configured for integrating a data source into a database is depicted, comprising a memory 130 and at least one processing unit 120. The device 100 may include an interface 110, or data communication module, which may be configured to receive data from the data source and communicate with the database 19 and data sources 10, 11 of Figure 2. The memory 130 contains instructions executable by said at least one processing unit 120, wherein execution of the instructions causes the device 100 execute a as described above.

Summarizing, techniques for integrating a data source into a database are provided, wherein fusion data of the data source is obtained comprising a plurality of features, which are extracted from a schema of the data source and from data of the data source. Subsequently, a learnt fusion model is applied to the fusion data, wherein the fusion model comprises a combination of a machine-learning model and a rule-based model, in order to generate mapping specifications, which are to be used for mapping data of the data source and the schema of the data source to the knowledge graph, when integrating the data source into the knowledge graph.

Thereby, techniques according to the present disclosure combine two major AI mechanisms, a rule-based model and a machine-learning model, and in particular use a knowledge graph functionality to combine these two mechanisms to offer a data integration mechanism to a user, wherein mapping specifications are recommended to the user by the combined AI mechanism. In such a way, a hybrid AI mechanism for solving the problem of combining data from disparate and/or heterogeneous data sources is provided as a unified solution to a user.

Accordingly, the techniques according to the invention enable faster and facilitated integration of a data source by recommending to a user mapping specifications for mapping data of the data source and a schema of the data source to a knowledge graph, and, therefore, provide efficient ways to handling the great variety and amount of temporal and measurement data in the area of industrial applications.

### Further embodiments comprise:

In a first embodiment, a method for integrating a data source 10, 11 into a knowledge graph, comprising:
- obtaining fusion data 13, the fusion data 13 comprising:
   a plurality of features, which are extracted from a schema of the data source 10, 11 and from data of the data source 10, 11;
- applying a fusion model 22, which comprises a combination of a machine-learning model and a rule-based model, to the fusion data 13 to generate mapping specifications 18 for mapping data and the schema of the data source 10, 11 to the knowledge graph.

In a second embodiment, the method according to the first embodiment, wherein the fusion data 13 further comprises at least one schema constraint, which is extracted from the data source 10, 11.

In a third embodiment, the method according to the first or second embodiment, wherein obtaining fusion data 13 comprises :
- extracting a data source schema and sample data 12, which is a subset of the data of the data source 10, 11, from the data source 10, 11; and
- extracting a features from the data source schema and from the sample data to determine the fusion data 13.

In a fourth embodiment, the method according to the third embodiment, wherein the data source is a structured data source 10, and wherein extracting the data source schema and sample data comprises:
- receiving a stream of instance data from the structured data source 10, and detecting the conceptual data source schema of the structured data source 10.

In a fifth embodiment, the method according to the third embodiment, wherein the data source is a unstructured data source 11, and wherein extracting the data source schema and sample data comprises:
- determining a data source schema from the unstructured data source, and receiving data from the unstructured data source, using a machine-learning mechanism.

In a sixth embodiment, the method according to one of the preceding embodiments, further comprising:
- integrating, using the mapping specifications (18), data from the data source 10, 11 into the knowledge graph.

In a seventh embodiment, the method according to one of the preceding embodiments, wherein the rule-based model of the fusion model 22 is applied to the fusion data 13 further utilizing at least one of:
Axioms of the knowledge graph, user-specified rules, template transformations, user-specified transformations, and an ontology of the knowledge graph.

In an eighth embodiment, a method for learning a fusion model 22 for integrating a data source 10, 11 into a knowledge graph, comprising:
- obtaining training data 14 comprising:
   a plurality of features, which are extracted from a schema of a training data source and from data of the training data source; and
   mapping specifications for mapping data and the schema of the training data source to the knowledge graph;
- learning a fusion model 22 for generating mapping specifications for mapping data and a schema of a data source to the knowledge graph, which comprises a combination of a machine-learning model and a rule-based model, based on the training data 14.

In a ninth embodiment, a method according to the eight embodiments, wherein the fusion model 22 is learnt further utilizing at least one of:
Schema constraints, an ontology of the knowledge graph, one or more axioms, and one or more template transformations.

In a tenth embodiment, a method according to one of the preceding embodiments, wherein the knowledge graph is an ontology-driven database.

In an eleventh embodiment, a method according to one of the preceding embodiments, wherein the ontology of the knowledge graph is a domain ontology, in particular a domain ontology of industrial applications.

In a twelfth embodiment, a method according to one of the preceding embodiments, wherein the mapping specifications are in a format selected from: R2RML, SPARQL, RML, YAML, and JSON.

In a thirteenth embodiment, a device for integrating a data source 10, 11 into a knowledge graph, configured to:
- obtain fusion data 13, the fusion data 13 comprising:
   a plurality of features, which are extracted from a schema of the data source 10, 11 and from data of the data source 10, 11;
- apply a fusion model 22, which comprises a combination of a machine-learning model and a rule-based model, to the fusion data 13 to generate mapping specifications 18 for mapping data and the schema of the data source 10, 11 to the knowledge graph.

In a fourteenth embodiment, a device for integrating a data source 10, 11 into a knowledge graph according to the thirteenth embodiment, configured to perform the method of one of the second to twelfth embodiment.

In a fifteenth embodiment, a computing system configured to perform the method according to one of embodiments one to twelfth.

In a sixteenth embodiment, a computing system according to the fifteenth embodiment, wherein the system is a cloud-based, or a cluster-based computing environment.

In a seventeenth embodiment, a computer program, comprising program code which is to be executed by at least one processor, wherein executing the program code causes the at least one processor to perform the method according to one of embodiments one to twelfth.

In a eighteenth embodiment, a computer-readable storage medium comprising instructions which, when executed by a computer, cause the computer to carry out the method of one of embodiments one to twelfth.

## Claims

1. A method for integrating a data source (10, 11) into a knowledge graph, comprising:
- obtaining fusion data (13), the fusion data (13) comprising:
a plurality of features, which are extracted from a schema of the data source (10, 11) and from data of the data source (10, 11);
- applying a fusion model (22), which comprises a combination of a machine-learning model and a rule-based model, to the fusion data (13) to generate mapping specifications (18) for mapping data and the schema of the data source (10, 11) to the knowledge graph.

2. The method according to claim 1, wherein the fusion data (13) further comprises at least one schema constraint, which is extracted from the data source (10, 11).

3. The method according to claim 1 or claim 2, wherein obtaining fusion data (13) comprises:
- extracting a data source schema and sample data (12), which is a subset of the data of the data source (10, 11), from the data source (10, 11); and
- extracting a features from the data source schema and from the sample data to determine the fusion data (13).

4. The method according to claim 3, wherein the data source is a structured data source (10), and wherein extracting the data source schema and sample data comprises:
- receiving a stream of instance data from the structured data source (10), and detecting the conceptual data source schema of the structured data source (10).

5. The method according to claim 3, wherein the data source is a unstructured data source (11), and wherein extracting the data source schema and sample data comprises:
- determining a data source schema from the unstructured data source, and receiving data from the unstructured data source, using a machine-learning mechanism.

6. The method according to one of the preceding claims, further comprising:
- integrating, using the mapping specifications (18), data from the data source (10, 11) into the knowledge graph.

7. The method according to one of the preceding claims, wherein the rule-based model of the fusion model (22) is applied to the fusion data (13) further utilizing at least one of:
Axioms of the knowledge graph, user-specified rules, template transformations, user-specified transformations, and an ontology of the knowledge graph.

8. A method for learning a fusion model (22) for integrating a data source (10, 11) into a knowledge graph, comprising:
- obtaining training data (14) comprising:
a plurality of features, which are extracted from a schema of a training data source and from data of the training data source; and
mapping specifications for mapping data and the schema of the training data source to the knowledge graph;
- learning a fusion model (22) for generating mapping specifications for mapping data and a schema of a data source to the knowledge graph, which comprises a combination of a machine-learning model and a rule-based model, based on the training data (14).

9. Method according to claim 8, wherein the fusion model (22) is learnt further utilizing at least one of:
Schema constraints, an ontology of the knowledge graph, one or more axioms, and one or more template transformations.

10. Method according to one of the preceding claims, wherein the knowledge graph is an ontology-driven database.

11. Method according to one of the preceding claims, wherein the ontology of the knowledge graph is a domain ontology, in particular a domain ontology of industrial applications.

12. Method according to one of the preceding claims, wherein the mapping specifications are in a format selected from: R2RML, SPARQL, RML, YAML, and JSON.

13. Device for integrating a data source (10, 11) into a knowledge graph, configured to:
- obtain fusion data (13), the fusion data (13) comprising:
a plurality of features, which are extracted from a schema of the data source (10, 11) and from data of the data source (10, 11);
- apply a fusion model (22), which comprises a combination of a machine-learning model and a rule-based model, to the fusion data (13) to generate mapping specifications (18) for mapping data and the schema of the data source (10, 11) to the knowledge graph.

14. Device for integrating a data source (10, 11) into a knowledge graph according to claim 13, configured to perform the method of one of claims 2 to 12.

15. Computing system configured to perform the method according to one of claims 1 to 12.
